Europäisches Patentamt

European Patent Office

Office européen des brevets

(11) Publication number: **. 0 001 460**
A1

# EUROPEAN PATENT APPLICATION

(21) Application number: 78200189.5

(22) Date of filing: 13.09.78

(51) Int. Cl.²: **A 23 F 1/04,** A 23 L 1/22,
B 65 D 77/24

(30) Priority: 30.09.77 US 838421

(43) Date of publication of application: 18.04.79
Bulletin 79/8

(84) Designated Contracting States: BE DE FR GB NL

(71) Applicant: THE PROCTER & GAMBLE COMPANY, 301
East Sixth Street, Cincinnati Ohio 45217 (US)

(72) Inventor: Pultinas, Edmund Paul, Jr., 6016 Monticello
Avenue, Cincinnati, OH 45224 (US)

(74) Representative: Gibson, Tony Nicholas et al, Procter &
Gamble European Technical Center Temselaan 100,
B-1820 Strombeek-Bever (BE)

(54) Article and method for the aromatization of coffee products.

(57) An article useful for the aromatization of coffee products is described. The article comprises a microporous cellulosic polymer (18) impregnated with coffee aroma volatiles and encased within an envelope of sheet material (12 and 20) substantially impervious to the diffusion of coffee aroma volatiles. The envelope is perforated to permit gradual passage of coffee aroma volatiles.

The article can be employed in conjunction with a soluble or other coffee product to provide such product with a pleasant coffee aroma.

## ARTICLE AND METHOD FOR THE AROMATIZATION
## OF COFFEE PRODUCTS

This invention relates to an article useful for the aromatization of coffee products and to a method for aromatizing such products. More particularly, it relates to an article useful in conjunction with coffee products to provide a source of pleasant coffee aroma.

Soluble coffee powders have long been known to be relatively deficient in the aromas characteristic of fresh roasted and ground coffee. This deficiency has generally been attributed to the loss of volatile aroma principles during the drying of a coffee extract into the soluble or instant powder. Thus, the opening of a jar of instant or soluble coffee powder has not been attended by the pleasant coffee aroma characteristic of the initial opening of a can of roasted and ground coffee.

0001460

Various attempts have been made at providing soluble coffee products with coffee aromas. The aromatization of soluble coffee powders has been described, for example, in U.S. Patents 2,947,634 (issued August 2, 1960 to Feldman et al.); 3,148,070 (issued September 8, 1964 to Mishkin et al.); and 3,769,032 (issued October 30, 1973 to Lubsen et al.). These patents describe methods for aromatizing soluble powders by addition of a carrier such as coffee oil carrying volatile coffee aromas. Other methods for the aromatization of soluble powders can be found, for example, in U.S. Patent 2,156,212 (issued April 25, 1939 to Wendt et al.); 2,306,061 (issued December 22, 1942 to Johnston); and 2,738,276 (issued March 13, 1956 to Blench).

The incorporation of coffee aromas into a coffee product involves the addition of volatile or fugitive principles which tend to be readily lost. For example, the addition of aromatized coffee oil to soluble coffee products by the conventional technique of spray-plating results in considerable loss of volatile aromatics. In addition, the volatile aroma principles are frequently not retained by the soluble coffee product with the result that the aroma provided in the headspace of a jar of such product is soon spent. The repeated cycle of opening and closing of jars of soluble coffee product is frequently attended by a rapid decline in the amount of detectable headspace aroma. It will be appreciated, therefore, that it would be desirable to provide a means for the aromatization of coffee products with a source of coffee aroma capable of providing pleasant coffee aroma throughout the useful life of such product and the frequent and prolonged exposures normally incident to the use of such product.

- 3 -

0001460

It is an object of the present invention to provide an article and method for the aromatization of coffee products.

It is another object of the present invention to provide an article capable of providing a continual supply of coffee aroma to soluble coffee powders.

It is another object of the present invention to provide a means whereby a soluble coffee powder can be provided with a source of pleasant coffee aroma throughout the useful life of the soluble powder product.

Other objects will become apparent from the description appearing hereinafter.

## SUMMARY OF THE INVENTION

These and other objects can be achieved by the present invention which resides in an article suited to the aromatization of coffee products. Summarizing the invention, the article comprises a microporous cellulosic substrate impregnated with coffee aroma volatiles and encased within an envelope of sheet material substantially impervious to the diffusion of coffee aroma volatiles but having perforations sufficient in size and number to permit gradual passage therethrough of the coffee aroma volatiles. It has been found that the impregnation of a microporous cellulosic polymer with coffee aroma volatiles and the encasement thereof in an envelope of perforated sheet material enables the provision of an article suited for the aromatization of coffee products. Such an article, when implanted, for example, in a container of soluble coffee powder, provides by the gradual passage of coffee aroma volatiles through the perforations of the encasing sheet material, a headspace in the container of pleasant coffee aroma. Thus, the user of the aromatized soluble

- 4 -

0001460

coffee product detects upon repeated openings of the product
container, a pleasant aroma simulating that which is experienced
upon the opening of a can of roasted and ground coffee.

In its method aspect, the present invention resides
in a method for providing a container of coffee product with a
headspace of pleasant coffee aroma.  This is accomplished by
enclosing in such container of coffee product an article of
the invention, and allowing coffee aroma volatiles to gradually
pass from the article into the headspace of the container.  Upon
opening of the container, the release of pleasant coffee aroma
volatiles from the headspace is detected.

Various objects, details, constructions, operations,
uses, advantages and modifications of the invention will be
apparent from the following description taken in conjunction
with the illustrative drawing of certain embodiments thereof.

THE DRAWING

FIG. 1 is a plan view of an article of the invention.

FIG. 2 is a cross-section along the line 2-2 of
FIG. 1.

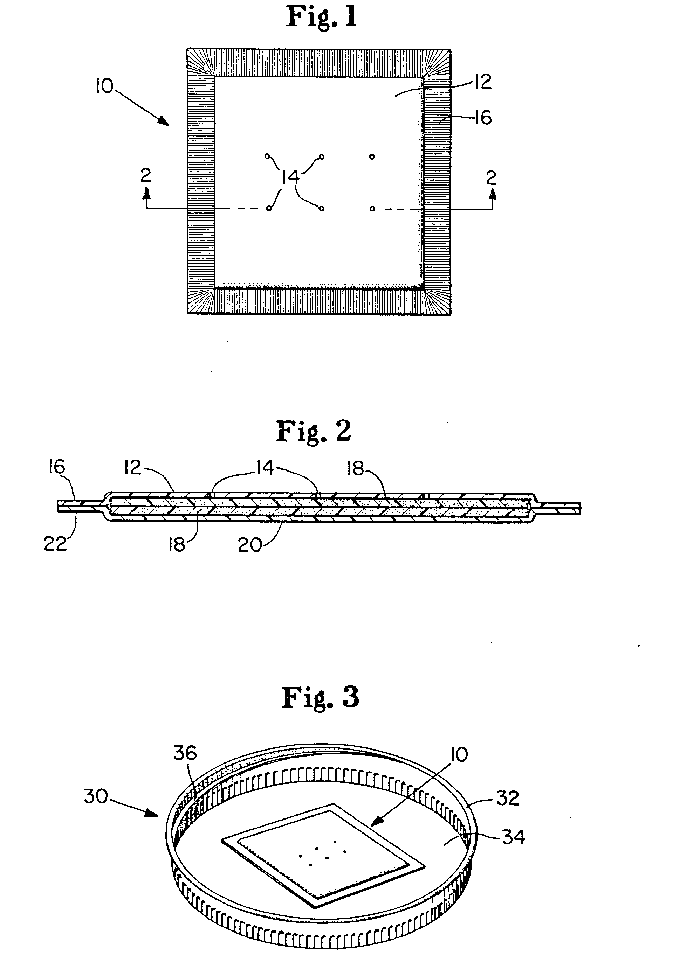

FIG. 3 is a perspective view of a particular embodiment of the present invention illustrating the article of
FIG. 1 fixedly secured to the inner side of the top of a
container, which may be securely attached to a jar of soluble
coffee powder.

DETAILED DESCRIPTION OF THE INVENTION

In FIG. 1, is shown a coffee-aromatizing article 10
comprising a coffee aroma-impregnated substrate, not shown,
encased within an envelope of plastic or other sheet material
12 having perforations 14 to permit gradual passage of coffee
aroma volatiles.  The envelope sheet material 12 is hermetically
sealed about the edges 16 thereof to define an enclosure.

0001460

The structure of article 10 can be seen by reference to FIG. 2, which is a cross-section along the line 2-2 of FIG. 1, and wherein there is shown an envelope comprised of two sheets of plastic or other sheet material 12 and 20 hermetically sealed at the edges 16 and 22 to define an enclosure. Sheets 12 and 20 can be of the same or different materials. Within the enclosure is shown a source or reservoir of coffee aroma comprised of sheets 18 of microporous cellulosic polymer impregnated with coffee aroma volatiles. Sheets 12 and 20 which comprise the envelope are of material substantially impervious to the diffusion of coffee aroma volatiles. The aroma volatiles are allowed to pass through the perforations 14 of sheet material 12 so as to provide the surrounding atmosphere with a pleasant coffee aroma. The article of the present invention will in use provide a supply of pleasant coffee aroma to the headspace of a coffee product. As used herein, the "headspace" refers to the space existing in a packaged coffee product above the fill level of the product. When the headspace is aromatized, and the coffee product is opened, the user can detect the pleasant coffee aroma.

The coffee-aromatizing article or sachet of the invention comprises as its essential components a source or reservoir of coffee aroma volatiles impregnated into a substrate of microporous cellulosic polymer and an envelope of sheet material having perforations through which coffee aroma volatiles can pass. The coffee-impregnated substrate and envelope materials are described in greater detail hereinafter.

The microporous cellulosic polymer substrate which serves the function of a vehicle for the diffusion of aroma volatiles comprises an important element of the article of the present invention. It has been found that coffee aroma volatiles can be effectively released over a sustainable and controlled period by the combined use of such microporous cellulosic

0001460

polymer and an encasing envelope of a sheet material which is substantially impervious to the diffusion of coffee aroma volatiles but which is provided with perforations sufficient in size and number as to permit gradual passage of the coffee aroma volatiles.

The cellulosic polymer employed in the article or sachet of the present invention is a polymer-liquid composite material containing distinct, interpenetrating polymer and liquid phases of submicroscopic, but supramolecular, dimensions. The polymer-liquid composite material is comprised of distinct interpenetrating phases of a mobile and diffusion-supporting liquid phase within an interpenetrating, form-retentive solid phase. The cellulosic non-solvent liquid phase can comprise from about 50% to 99% by weight of the polymer-liquid composite material. Preferably, the polymer will comprise from about 70% to about 85% non-solvent liquid phase which can by diffusive exchange be displaced in whole or in part with coffee aroma volatiles.

Suitable microporous cellulosic polymer-liquid composite materials are those having a plurality of ultramicroporous interconnected internal pores having a size in the range of from about 10 to about 250 Angstroms. The initial porosity of the polymer-liquid composite material can be permanently readjusted to a smaller pore size, either before or after incorporation of a desired impregnant or by controlled removal of a portion of the internal and interpenetrating liquid phase, for example, by evaporation. The polymer-liquid composite substrate materials of the invention readily exchange their internal liquid for other miscible liquids or solutions and, thus, allow pressurized or diffusive

- 7 -

0001460

permeation of liquid through their structure. The polymer-liquid composite material can be contacted with a source of coffee aroma volatiles for a diffusive exchange between the liquid phase and the coffee aroma volatiles. The resulting coffee aroma-impregnated polymer-liquid composite material can thereafter be placed into a desired environment for controlled release of the coffee aroma volatiles.

The cellulosic polymer-liquid composite material useful in the construction of the article of the invention includes cellulose esters such as cellulose triacetate, cellulose nitrate, or a discrete or molecular mixture thereof. A preferred cellulosic polymer is a microporous cellulose triacetate comprised of 30% polymer by weight and 70% aqueous phase, although other polymers can be employed.

The polymer-liquid composite materials useful in the construction of an aromatizing article or sachet of the present invention can be in sheet, microspherical, or fiber form. Preferably, the polymer-liquid composite will be in the form of a sheet to facilitate construction of a relatively thin and flat aromatizing article. Sheets of various thickness can be employed, the thickness being determined by the relative proportions of interpenetrating phases, the nature of the aroma volatiles employed, the size of the desired aromatizing article, and the like. Sheets of thickness of about 4 to 20 mils are preferred and provide a vehicle for effective aromatization of coffee products A plurality of sheets can be employed. Fibers or microspheres, can also be employed. For example, microspherical polymer-liquid composite material in the particle size range of 1 to 500 microns, e.g., 50 to 300 microns, can be suitably employed.

The cellulosic polymeric substrate material is impregnated with a source of coffee aroma. The coffee aroma

0001460

can be either natural or synthetic and will normally be combined with an aroma carrier for incorporation into the cellulosic substrate material. Suitable examples of aromatizing coffee volatiles are those obtained from roaster and grinder gases and from the condensation of steam-distilled volatile aromas. Examples of suitable aroma materials are described in U.S. Patents 2,947,634 to Feldman et al.; 3,148,070 to Mishkin et al.; 2,562,206 to Nutting; 3,132,947 to Mahlmann; 3,615,665 to White et al.; 3,769,032 to Lubsen et al.; and 3,035,922 to Mook et al.. A preferred source of coffee aroma is an aroma frost obtained by the condensation of the aroma constituents of grinder gas. Preferably, the aroma frost material will be combined with a suitable carrier, such as a glyceride, e.g., triacetin, coffee oil or bland-tasting vegetable oil to provide an aroma-enriched carrier material suited for impregnation of the cellulosic polymer substrate. A preferred aroma carrier is coffee oil.

Aroma-enriched carrier oil is generally prepared by mixing the coffee oil and aroma frost, allowing the mixture to equilibrate and allowing the mixture to liquefy. The resulting liquid mixture can then be incorporated into the cellulosic substrate material by diffusive exchange. This will normally be accomplished by immersing, coating, or otherwise applying the source of coffee aroma to the substrate material in a manner which allows for a partial or total diffusive exchange of the liquid interpenetrating phase of the polymer-liquid composite material. A preferred means for incorporating the aroma volatiles into the polymer-liquid composite material is to immerse the substrate into the source of coffee aroma and to remove any excess aroma material from the substrate. This results in the provision of a substrate containing the source of coffee aroma volatiles while being substantially dry to the touch.

The resulting aroma-impregnated substrate material can then be suitably incorporated into an envelope material for manufacture of an aromatizing article.

The amount of aroma volatiles impregnated into the microporous cellulosic substrate will depend upon the displaceable void volume of the substrate, the nature or source of aroma volatiles, the thickness or size of polymeric sheets or microspheres, the amount of coffee product desirably aromatized, the desired size or configuration of the article, and the like. Generally, it will be convenient to saturate the substrate with, for example, aroma-enriched coffee oil. The resulting aromatized substrate can then be encased. In general, aromatization of a soluble coffee product can be accomplished by encasing about 0.15 to about 1.5 grams of the aroma-impregnated substrate per four ounces of soluble coffee powder. Preferably, from about 0.5 to about 1 gram per four ounces of product will be employed, although variations can be suitably made. It will be appreciated that the microporous character of the cellulosic substrate permits impregnation of a relatively large quantity of aroma volatiles, thus, realizing the advantage of the employment of an aromatizing article of relatively small size. The employment of a diffusor device of obtrusive dimensions is readily avoided.

The sheet material which comprises the envelope for the aroma-impregnated substrate material comprises an important element of the aromatizing article or sachet. It has been found that the incorporation into a jar of soluble coffee of a sheet of microporous cellulose triacetate polymer (impregnated with a mixture of coffee oil and a frost of grinder gas aroma volatiles) results in inefficient aromatization of the soluble

0001460

coffee product. The aroma is rapidly diffused from the micro-. porous substrate after few openings of the product. It has been found that the effective life of an aroma-impregnated microporous cellulosic polymer can be substantially increased by the encasement of the polymer material in a sheet material which is substantially impervious to the diffusion of coffee aroma volatiles but which is provided with sufficient perforations to permit gradual passage of the coffee aroma volatiles.

A suitable envelope material for the article of the invention is a sheet material substantially impervious to the diffusion of coffee aroma volatiles. The term "substantially impervious", as used herein with reference to the envelope material, refers to a material which is sufficiently impervious to the diffusion of coffee aroma volatiles as to diffuse no level of aroma volatiles detectable by the olfactory senses. It will be appreciated that almost all materials will permit diffusion of gaseous substances to at least some degree. An envelope material of the present invention is, however, one which can be employed as an encasing material for a coffee aroma-impregnated microporous cellulosic polymer material without diffusing coffee aroma detectable by the olfactory senses. The envelope material, unless provided with perforations for the passage therethrough of the coffee aroma volatiles, will serve as a practical and effective barrier to the diffusion of coffee aroma.

The envelope material can comprise any of a number of plastic sheet materials which are substantially impervious to the diffusion of coffee aroma volatiles, as herein specified. Metallic foils such as aluminum or tinfoil can also be employed. Materials employed as the envelope, in addition to being substantially impervious to the diffusion of coffee aroma volatiles, should be chemically inert. Preferably, the sheet will be a plastic material, for example, a film of an organic polymer which is capable of being heat-sealed. Suitable materials include "Mylar", a product of E. I. du Pont de Nemours & Co., or "Estar", a product of Eastman-Kodak Inc., which products are films of polyethylene terephthalate. Also suitable is "Saran", a copolymer of vinylide chloride and vinyl chloride and a product of Dow Chemical Company. A preferred envelope material is a composite film, manufactured by the Dow Dobeckmun Division of the Dow Chemical Company, Cleveland, Ohio, which is a composite film comprising a 0.5 mil sheet of Mylar, a Saran inner layer, and a 3 mil sheet of polyethylene. This envelope material is substantially impervious to the diffusion of coffee aroma volatiles and is heat-sealable for the provision of an aromatizing article. It will be appreciated that other sheet materials which are substantially impervious to the diffusion of coffee aroma volatiles can likewise be employed.

The envelope material of the article of the invention is perforated as a means of allowing for the passage of coffee aroma volatiles into the surrounding atmosphere. It will be appreciated that, without the provision of perforations, the substantially impervious envelope material would constitute an effective barrier to the aromatization of the atmosphere surrounding the article of the invention. The number and size of perforations provided in the envelope material will vary depending upon the nature of the envelope material, the porosity of the aroma-impregnated cellulosic polymer substrate encased within the envelope, the particular nature of the coffee

0001460

aroma volatiles impregnated therein, the size of the aromatizing article, the desired level of aromatization, and the like. The provision of perforations sufficient in size and number as to permit gradual passage through the perforations of the coffee aroma volatiles can be readily accomplished. The perforations can include holes or slits of any configuration. Controlled passage of coffee aroma volatiles can be realized by the provision of tiny perforations. Suitable results can be obtained where the perforations represent from about 0.01% to about 1% of available surface area. Available surface area is defined as the surface area of the envelope exposed to the surrounding atmosphere and bounded by the heat-sealed edges of the article. Preferably, the perforations comprise from about 0.05% to about 0.15% of the available surface area.

While applicant does not wish to be bound by any precise theory with regard to the phenomena occurring throughout the use of the article of the invention, it is believed that the provision of the perforations for the escape of coffee aroma volatiles allows for the passage into the headspace of volatiles having essentially the aroma quality of the volatiles initially impregnated into the cellulosic substrate. Whereas the diffusion of gaseous volatiles through a barrier of sheet material may result in a selective diffusion and a resulting difference in aroma between the volatiles initially impregnated into the substrate and those detected from the headspace of a coffee product, the passage of aroma volatiles through the perforations is believed to avoid selective diffusion. The utilization of a microporous substrate is also believed to be advantageous from a stability standpoint. Since the aroma volatiles are impregnated into the voids of the microporous substrate, the occasion for these volatiles to be adversely affected by oxidative phenomena is believed

0001460

to be minimized. The freshness of aroma observed after repeated cycles of opening and closing coffee product is believed in part attributable to this protective mechanism. In contrast, the development of rancidity in coffee products using conventional aromatizing coffee oils has been evident.

The aromatizing article of the invention can be fabricated into any of a variety of forms. Thus, the article can be constructed to resemble a square or rectangular packet. The article can be fabricated into a circular packet or into any of a variety of other shapes.

A preferred article comprises a square envelope of about 1-3/4 x 1-3/4 inches in size, laminated at the edges and encasing two 20-mil sheets of superposed aroma-impregnated microporous cellulose triacetate polymer, and provided on one side with six perforations from a narrow gauge needle. It will be appreciated that other geometric constructions can be employed consistent with the provision of desired aroma impact upon opening a container of product containing the article and without so rapid a permeation of aroma as to negate the provision of aroma throughout the useful life of the product.

The article of invention can be employed for the aromatization of a number of products. Inasmuch as soluble coffee products tend to be most deficient in aroma, employment of the article of the invention in such products will be most practical. The article can, however, also be employed in combination with roast and ground coffees, e.g., vacuum coffees, decaffeinated and partially decaffeinated coffees, and mixtures of coffee and non-coffee substances, e.g., roasted-malted barley and synthetic coffee and coffee substitutes.

0001460

The article of the invention can be employed in combination with coffee products in a number of ways. The aromatizing article can be fixed to the bottom or sides of a container or placed unattached at the bottom of such container. For example, the aromatizing article can be provided in unattached manner at the bottom of a conventional jar onto which soluble coffee powder can be placed with the aid of a conventional pneumatic filling device. A conventional jar lid can then be placed onto the jar of soluble powder to complete the packaging of the coffee product.

According to a particular embodiment of the invention, the aromatizing article can be attached to the inner side of a removable container top. This embodiment is illustrated as article 30 in FIG. 3 wherein there is illustrated a conventional container jar top 32 provided with a lid liner 34 to which the aromatizing article 10 is fixedly attached with the aid of an adhesive (not shown). The lid 32 is equipped with threads 36 to allow article 30 to be fixedly secured to a conventional jar (not shown). Coffee product can be filled into a suitable jar container and the article 30 can be screwed into place for packaging of an aromatized product.

The article and method of the present invention provide certain advantages over conventional methods for the aromatization of coffee products. As is known, the aromatization of coffee products, such as soluble powders, is usually accomplished by a more or less even distribution of volatiles throughout the coffee product. As the coffee product is consumed, the reservoir of aroma volatiles is also consumed. In contrast, the article of the invention retains its structural integrity throughout the useful life

0001460

of the coffee product. Moreover, the aromatization of coffee products with the article of the invention provides a means for supplying a headspace of pleasant coffee aroma without the occurrence of an oily deposit or surface slick commonly observed in the preparation of a cup of "instant" coffee as the result of the presence in the cup of a quantity of aromatizing oil. Thus, the appearance of an oil deposit, which may be undesirable to some consumers, can be avoided by utilization of a source of aroma volatiles in the form of the article of the invention.

The following Examples illustrate certain preferred embodiments of the invention and are not intended as limiting the invention.

## EXAMPLE I

A sheet of microporous cellulose triacetate polymer (comprised of 70% water and 30% by weight cellulose triacetate, and available as Poroplastic film MA-70 from Moleculon Research Corp., Cambridge, Mass.) was immersed in excess absolute ethanol (1 part cellulosic film : 16 parts by weight ethanol). The cellulosic film was immersed for 24 hours, during which period the aqueous phase was essentially displaced by ethanol. The ethanol-impregnated film was then immersed in an aromatized coffee oil (prepared by the method of EXAMPLE I of U.S. Patent 3,769,032). A 23-fold excess of aromatized coffee oil to ethanol-impregnated film was employed and the ethanol was allowed to become displaced by the aromatized coffee oil. Four days were allowed for the displacement of the ethanol by the aromatized coffee oil. After the displacement was complete, the film, impregnated with the aromatized coffee oil, was removed from the bath in which the displacement was allowed to occur. The sheet was cut to a square of about 1.25 x 1.25 inches and excess oil was wiped from the surface of the film with the aid of paper towelling. The resulting impregnated film was then

0001460

heat-sealed into a polymeric film envelope. The envelope consisted of a composite of Mylar film of 0.5 mil thickness to which had been applied a thin coating of Saran followed by an outer coating of polyethylene of three mil thickness. The composite film (manufactured by Dow Dobeckmun Division of the Dow Chemical Company) was then perforated on one surface to form small openings to allow for slow diffusion of aroma from the enveloped article. Six holes were provided by perforating the film with a narrow gauge needle.

The article prepared as described in Example I was placed at the bottom of a conventional jar to which was added 4.5 ounces, by weight, of soluble coffee powder. A conventional screw-top lid equipped with a pulp-Mylar composite liner, was secured to the jar to complete packaging of the soluble coffee product. The product was allowed to equilibrate for 48 hours. When opened, a pleasant coffee aroma was detected. The jar was again sealed and the headspace of the jar was allowed to be replenished by the source of coffee aroma of the article of Example I. Upon reopening of the jar, a pleasant coffee aroma was again detected.

EXAMPLE II

An article prepared in the manner of Example I was affixed with white synthetic-base resin to the liner of a conventional screw-top lid. The lid was then used to enclose a jar containing two and one-half ounces of instant coffee. The product was allowed to equilibrate for 16 hours. When opened, a pleasant coffee aroma was noted. The jar was again sealed and the headspace of the jar was replenished. The sequence was repeated over several openings with the pleasant coffee aroma being observed each time.

- 17 -     0001460

WHAT IS CLAIMED IS:

1.  An article of manufacture characterized in comprising: a substrate of microporous cellulosic polymer impregnated with coffee aroma volatiles, said impregnated microporous polymer substrate comprising interpenetrating phases of polymer and non-solvent liquid containing coffee aroma volatiles; and, encasing said impregnated microporous polymer substrate, an envelope of sheet material substantially impervious to the diffusion of said coffee aroma volatiles but having perforations sufficient in size and number to permit gradual passage therethrough of said coffee aroma volatiles, whereby said coffee aroma volatiles are released from said article to the surrounding atmosphere.

2.  An article according to Claim 1 characterized in that the non-solvent liquid phase of said substrate of microporous cellulosic polymer comprises from 50% to 99% by weight.

3.  An article according to Claim 1 or 2 characterized in that the substrate of microporous cellulosic polymer has a plurality of ultramicroporous interconnected internal pores having a size in the range of from 10 to 250 Angstroms.

4.  An article according to any preceding Claim characterized in that the substrate of microporous cellulosic polymer is a polymer of cellulose triacetate.

5.  An artilce according to Claim 4 characterized in that the microporous cellulose triacetate polymer is impregnated with an aromatized glyceride.

6.  An article according to Claim 5 characterized in that the aromatized glyceride is a mixture of coffee oil and a condensate of grinder gas aroma volatiles.

7.  An article according to any preceding claim characterized in that sheet material encasing said microporous cellulose triacetate substrate is a plastic sheet material.

8. A method for providing a container of coffee product with a headspace of coffee aroma characterized in enclosing within said container of coffee product an aromatizing article according to any of Claims 1 to 7 and allowing coffee aroma volatiles to gradually pass from said article into the headspace of said container, whereby upon opening of the container, the release of said coffee aroma volatiles from the headspace is detected.

9. A method according to Claim 8 characterized in that the aromatizing article is enclosed within said container of coffee product by placing the article at the bottom of the container and filling the container with coffee product.

10. A method according to Claim 8 characterized in that the aromatizing article is enclosed within said container of coffee product by attaching the aromatizing article to the inner side of the top of said container and fixedly securing said top to the container of said product.

**Fig. 1**

**Fig. 2**

**Fig. 3**

European Patent Office

**EUROPEAN SEARCH REPORT**

0001460

~~Application number~~

EP 78 20 0189

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | US - A - 1 426 011 (J. REYNOLDS) <br> * Claims 1-3; page 2, line 110 - page 4, line 32; figure 1 * <br> ---- | 1,8 | A 23 F 1/04 <br> A 23 L 1/22 <br> B 65 D 77/24 |
| A | FR - A - 2 316 882 (D. MULLER) | | |
| A | NL - A - 66 16898 (UNILEVER) | | |
| A | DE - A - 2 052 267 (W. PELZ) | | |
| A | FR - A - 2 307 546 (M. SCHAPIRA) | | TECHNICAL FIELDS SEARCHED (Int.Cl.²) |
| A | FR - A - 2 336 946 (S. JOHNSON) <br> ---- | | A 23 F 1/04 <br> A 23 L 1/22 <br> 1/221 <br> 1/234 <br> B 65 D 77/24 <br> 51/24 <br> A 61 L 9/04 <br> 9/12 |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 10-01-1979 | DESMEDT |

EPO Form 1503.1   06.78